# EUROPÄISCHE PATENTSCHRIFT

(11) **EP 3 223 965 B1**
(45) Veröffentlichungstag und Bekanntmachung des Hinweises auf die Patenterteilung: **22.04.2026**
(21) Anmeldenummer: 15797877.6
(22) Anmeldetag: 03.11.2015
(51) Int. Cl.: B05D 7/00, B32B 15/08, B32B 15/095, B32B 15/18, B32B 5/18, B32B 15/04

(54) **HALBZEUG, VERFAHREN ZUM HERSTELLEN EINES HALBZEUGS SOWIE DESSEN VERWENDUNG**
SEMI-FINISHED PRODUCT, METHOD FOR PRODUCING A SEMI-FINISHED PRODUCT AND USE THEREOF
PRODUIT SEMI-FINI, PROCÉDÉ DE PRODUCTION D'UN PRODUIT SEMI-FINI ET SON UTILISATION

(30) Priorität: 27.11.2014 DE 102014017492
(43) Veröffentlichungstag der Anmeldung: 04.10.2017
(73) Patentinhaber: ThyssenKrupp Steel Europe AG, 47166 Duisburg (DE)
(72) Erfinder: BODE, Lars, 40237 Düsseldorf (DE); SÜNKEL, Ralf, 40883 Ratingen (DE)
(74) Vertreter: ThyssenKrupp Steel Europe AG
(86) Internationale Anmeldenummer: PCT/EP2015/075521
(87) Internationale Veröffentlichungsnummer: WO 2016/083083

(56) Entgegenhaltungen:
- WO-A1-2014/114370
- WO-A1-2015/032623
- DE-A1- 10 130 005
- DE-C1- 19 730 893

## Beschreibung

Die Erfindung betrifft ein Verfahren zum Herstellen eines platinen- oder bandförmigen Halbzeugs durch Bereitstellen eines bandförmigen Coils umfassend mindestens eine erste Metallschicht und mindestens eine Kunststoffschicht, die vollflächig zu einem Metall/Kunststoffverbund miteinander verbunden sind, wobei die Materialdicke der Metallschicht höchstens 1,5 mm beträgt und die Materialdicke der Kunststoffschicht mindestens 0,2 mm beträgt und Beschichten der sichtbaren Oberfläche der Metallschicht des Metall/Kunststoffverbunds im Coil-Coating-Verfahren, sowie dessen Verwendung.

Im Stand der Technik sind insbesondere Metall/Kunststoff/Metallverbunde bekannt. Die Anmelderin vertreibt unter dem Handelsnamen Litecor^{®} Sandwichbleche, die aus zwei Stahlblechdecklagen mit einer Materialdicke zwischen 0,2 bis 0,3 mm und einem zwischen den Stahlblechdecklagen angeordneten Kunststoffkernschicht mit einer Materialdicke von mindestens 0,3 mm bestehen, welche sich als Außen- und/oder Innenteile insbesondere eines Personenkraftwagens hervorragend eignen. WO 2014/114370 offenbart ein Verfahren zum Herstellen von verzinktem Fein- oder Feinstblech mit hoher Korrosionsbeständigkeit aus einem warmgewalzten Stahlband mit den Schritten galvanisches Beschichten des Stahlbands mit Zink, Dressierwalzen der zinkbeschichteten Oberfläche des Stahlbands, ein- oder beidseitiges Auftragen einer Polymerbeschichtung oder eines organischen Lacks auf die zinkbeschichtete Oberfläche des Stahlbands.

Ferner sind aus dem Stand der Technik Bauteile insbesondere für die Beplankung von beispielsweise Nutzfahrzeugen, speziell von Anhängern (Trailer), insbesondere Kofferaufbauten für den Tiefkühltransport aus Metall-Sandwich-Paneelen bekannt. Beispielsweise wird dabei als Außenfläche ein beidseitig feuerverzinktes Coil-Coating-Stahlblech, als Innenfläche ein beidseitig feuerverzinktes und mit einem lebensmittelbeständigen Kunststoff beschichtetes Stahlblech und eine dazwischen angeordnete Kernschicht aus einem Polyurethanschaum verwendet (Produktinformation zu "ISOPLUS II vario" der Fa. Rohr Nutzfahrzeuge). Die eingesetzten Stahlbleche für den Kofferaufbau weisen eine Materialdicke von mindestens 0,6 mm auf. Um eine ausreichende Stabilität des Aufbaus sicherzustellen und aufgrund der insbesondere hohen auftretenden Belastungen während der Fahrt kann die angegebene Dicke zumindest für diesen Aufbautyp nicht weiter reduziert werden. Das Leichtbaupotential ist insbesondere in diesem Anwendungsfeld noch nicht ausgeschöpft. Auch in anderen Anwendungsfeldern besteht die Möglichkeit, bei dem Einsatz von Coil-Coating-Blechen mit Materialdicken bis zu 3,0 mm weiter Gewicht einzusparen, beispielweise bei Garagentoren.

Des Weiteren ist auch die Bandbeschichtung, in Fachkreisen auch "Coil-Coating" genannt, Stand der Technik. Als ein Beispiel sind unter dem Link http://de.wikipedia.org/wiki/Coil_Coating Informationen zu dem Beschichtungsverfahren abrufbar. Beschichtet werden in der Regel Stahlbänder, insbesondere feuerverzinkte Stahlbänder und Aluminiumbänder mit Materialdicken zwischen 0,4 und 3,0 mm. Materialdicken unterhalb von 0,4 mm erweisen sich beim Durchsetzen in Coil-Coating-Anlagen als äußerst schwierig, da eine vollflächige Beschichtung, insbesondere mit konstanter Dicke auf dem relativ dünnen Material nicht sichergestellt werden kann.

Ausgehend von dem Stand der Technik lag der Erfindung die Aufgabe zugrunde, ein Halbzeug bereitzustellen, welches deutlich leichter ist als die im Stand der Technik eingesetzten Halbzeuge, insbesondere ein Verfahren zu seiner Herstellung und dessen Verwendung anzugeben.

Gelöst wird die Aufgabe dadurch, dass auf die sichtbare Oberfläche der Metallschicht des Metall/Kunststoffverbunds eine Coil-Coating-Beschichtung aufgebracht wird.

Die Erfinder haben festgestellt, dass die Kombination aus mindestens einer Metallschicht und mindestens einer Kunststoffschicht zu einem Metall/Kunststoffverbund, welcher im Vergleich zu einem Vollmaterial aus Metall bei mindestens gleicher Materialdicke, wobei die Metallschicht eine Dicke von höchstens 1,5 mm, insbesondere höchstens 1,0 mm, vorzugsweise höchstens 0,5 mm und besonders bevorzugt höchstens 0,35 mm beträgt und die Dicke der Kunststoffschicht mindestens 0,2 mm, insbesondere mindestens 0,3 mm, vorzugsweise mindestens 0,4 mm beträgt, zum einen zu einer reduzierten Masse führen und zum anderen im Coil-Coating-Prozess nun auch bei Metallschichtdicken unterhalb der im Stand der Technik offenbarten Mindestdicke problemlos beschichtet werden können.

Gemäß einer ersten Ausführung ist die Metallschicht aus einem Stahlwerkstoff gebildet. Stahlwerkstoffe sind im Vergleich zu anderen Metallen, insbesondere im Vergleich zu Leichtmetallwerkstoffen zwar etwas schwerer, jedoch kostengünstig zu beziehen und leicht zu verarbeiten, insbesondere kalt zu verformen. Insbesondere werden metallisch, vorzugsweise beidseitig beschichtete Stahlwerkstoffe verwendet. Als Beschichtungen kommen zink- oder aluminiumbasierte Systeme in Frage, wobei verzinkte Stahlwerkstoffe besonders bevorzugt verwendet werden, da sie kostengünstig bereitgestellt werden können.

Gemäß einer weiteren Ausführung umfasst das Halbzeug eine zweite Metallschicht, die vollflächig mit der freien Oberfläche der Kunststoffschicht zu einem Metall/Kunststoff/Metallverbund verbunden ist. Das als Sandwich ausgebildete Halbzeug besitzt eine hohe Biege- und Beulsteifigkeit, welche bei angepasster Dicke im Wesentlichen denen eines Vollmaterials bei gleichzeitig reduzierter Masse entsprechen. Um das Leichtbaupotential sicherzustellen, beträgt die Materialdicke der zweiten Metallschicht höchstens 1,5 mm, insbesondere höchstens 1,0 mm, vorzugsweise höchstens 0,5 mm und besonders bevorzugt höchstens 0,35 mm. Die zweite Metallschicht kann vorzugsweise die gleichen Eigenschaften wie die erste Metallschicht, je nach Verwendung eine Coil-Coating-Beschichtung oder alternativ andere Beschichtungssysteme aufweisen. Abhängig vom Anwendungsbereich können die Metallschichten auch unterschiedlich dick ausgebildet sein.

Gemäß einer weiteren Ausführungsform ist die sichtbare Oberfläche der ersten und/oder zweiten Metallschicht texturiert. Die Texturierung kann zum einen als Erhebung im Zuge des Coil-Coatings auf die Metallschicht aufgebracht respektive appliziert werden. Dies kann beispielsweise durch entsprechend bearbeitete Applizierwalzen umgesetzt werden. Dadurch, dass zumindest die erste Metallschicht eine geringe Materialdicke aufweist, können Unebenheiten im Material vorliegen, die je nach Anwendung, beispielsweise bei großflächigen Bauteilen, insbesondere bei Beplankungsteilen bei schlechten Licht- und Sichtverhältnissen ein negatives Erscheinungsbild vermitteln. Um diesem Nachteil entgegen zu wirken, können die Erhebungen die schlechte Anmutung in Form von beispielweise wiederkehrenden Mustern kompensieren bzw. ein verbessertes Erscheinungsbild verleihen. Alternativ oder kumulativ können Einprägungen nach dem Coil-Coating respektive nach dem Einbrennprozess in die zumindest erste Metallschicht eingeformt werden, beispielsweise mittels einer Prägewalze. Vorteilhaft ist zum einen, wie beispielsweise bei den Erhebungen die wiederkehrenden Muster, der zumindest ersten Metallschicht ein verbessertes Erscheinungsbild zu verleihen, aber zum anderen kann auch eine geringfügige Verfestigung in der Metallschicht bewirkt werden. Insbesondere ist die Prägekraft derart anzupassen, dass es nicht zu einem Fließen bzw. zu einer Dickenabnahme der Kunststoffschicht im Verbund kommt.

Gemäß einer weiteren Ausführungsform ist die Kunststoffschicht aus einem temperaturbeständigen Kunststoff gebildet. Dies ist von Vorteil, da der Metall/Kunststoffverbund respektive Metall/Kunststoff/Metallverbund im Coil-Coating-Prozess temporär hohen Temperaturen insbesondere beim Einbrennen eines beispielsweise vorher applizierten Haftvermittlers (Primer) und der Coil-Coating-Beschichtung respektive des auf die Metallschicht aufgebrachten Lackes ausgesetzt wird. Damit der Kunststoff sich nicht zersetzt respektive fließt, wird vorzugsweise ein Kunststoff eingesetzt, der bis mindestens 200°C, insbesondere bis mindestens 220°C temperaturbeständig ist. Bevorzugte Kunststoffe sind beispielsweise Systeme auf Basis PA, PE und/oder deren Mischungen.

Um die Steifigkeit und/oder Festigkeit des Halbzeugs zu verbessern bzw. die tragende Funktion im Halbzeug in die Kunststoffschicht zu verlagern, kann gemäß einer weiteren Ausführungsform ein faserverstärkter Kunststoff verwendet werden. Bevorzugt kommen insbesondere mit Glas-, Kohle- und/oder Naturfasern, insbesondere mit biologisch abbaubaren Fasern versetzte Kunststoffsysteme in Frage, wobei je nach Art der Faser Einfluss auf die Höhe der Festigkeit und/oder Steifigkeit des Kunststoffs genommen werden kann, insbesondere auch durch den Anteil des Füllgehaltes. Die eingesetzten Fasern sind vorzugsweise bis mindestens 200°C, insbesondere bis mindestens 220°C temperaturbeständig.
Gemäß einer Ausführung des erfindungsgemäßen Verfahrens wird eine zweite Metallschicht angeordnet, die vollflächig mit der freien Oberfläche der Kunststoffschicht zu einem Metall/Kunststoff/Metallverbund verbunden wird, wobei die freie Oberfläche der zweiten Metallschicht des Metall/Kunststoff/Metallverbunds im Coil-Coating-Verfahren beschichtet wird. Um Wiederholungen zu vermeiden, wird auf das Vorhergesagte, insbesondere zu den Ausführungen betreffend das Halbzeug verwiesen.

Gemäß einer weiteren Ausführung des erfindungsgemäßen Verfahrens wird die Einbrenntemperatur, die insbesondere zum Einbrennen eines vorher applizierten Haftvermittlers (Primer) und zum Einbrennen der Coil-Coating-Beschichtung respektive des auf die Metallschicht aufgebrachten Lackes derart auf den Kunststoff abgestimmt ist, sodass die Temperaturbeständigkeit des Kunststoffs sichergestellt ist, wobei eine Temperatur von insbesondere maximal 220°, vorzugsweise maximal 200°C eingestellt wird.

Gemäß einer weiteren Ausführung des erfindungsgemäßen Verfahrens wird die sichtbare Oberfläche der ersten und/oder zweiten Metallschicht texturiert. Dies kann zum einen als Erhebung im Zuge des Coil-Coatings auf die zumindest erste und/oder zweite Metallschicht appliziert werden und/oder zum anderen durch Einprägungen nach dem Coil-Coating respektive nach dem Einbrennprozess in die Metallschicht eingeformt werden.

Gemäß einem weiteren Aspekt betrifft die Erfindung eine Verwendung des Halbzeugs als Bauteil, insbesondere als Beplankungsteil für beispielsweise Nutzfahrzeuge, Anhänger (Trailer) oder Weiße Ware (Haushaltsgeräte). Um Wiederholungen zu vermeiden, wird auf das Vorhergesagte verwiesen.

Im Folgenden wird die Erfindung anhand einer Ausführungsbeispiele darstellenden Zeichnung näher erläutert. Gleiche Teile sind mit gleichen Bezugszeichen versehen. Es zeigt
- Figur 1:: einen Querschnitt durch einen Teil eines Kofferaufbaus für einen Tiefkühltransport aus dem Stand der Technik,
- Figur 2a):: einen Schnitt durch ein erstes Beispiel eines Halbzeugs, das als Beplankungsteil verwendet werden kann,
- Figur 2b):: einen Schnitt durch ein zweites Beispiel eines Halbzeugs, das als Beplankungsteil verwendet werden kann, und
- Figur 3:: eine schematische Abfolge von Schritten eines ersten Beispiels eines erfindungsgemäßen Verfahrens.

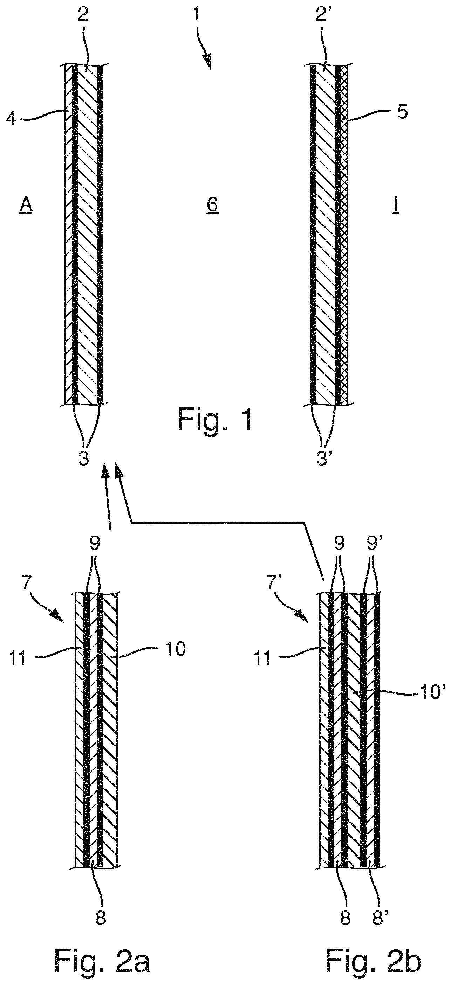

In Figur 1 ist als Beispiel ein Querschnitt durch einen Teil eines Kofferaufbaus für einen Tiefkühltransport aus Metall-Sandwich-Paneelen, wie er derzeit im Stand der Technik umgesetzt wird, dargestellt. Das Metall-Sandwich-Paneel 1 weist beispielsweise ein auf der Außenseite A angeordnetes erstes Stahlblech 2 auf, welches auf beiden Seiten des Stahlblechs 2 mit einer metallischen Beschichtung 3, insbesondere mit einer Zinkbeschichtung versehen ist. Zur Außenseite A ist auf der sichtbaren Oberfläche des Stahlblechs 2 eine weitere Beschichtung in Form einer Coil-Coating-Beschichtung 4 aufgebracht. Auf der Innenseite I des Metall-Sandwich-Paneels 1 ist ein zweites Stahlblech 2', welches auf beiden Seiten des Stahlblechs 2' mit einer metallischen Beschichtung 3', insbesondere mit einer Zinkbeschichtung und einer zur Innenseite I weiteren lebensmittelbeständigen organischen Schicht 5 versehen ist und eine Materialdicke aufweist, die beispielsweise der Materialdicke des ersten Stahlblechs 2 gleicht, angeordnet. Zwischen den Stahlblechen 2, 2' ist ein Kunststoffkern 6, beispielsweise ein geschäumter Kunststoff angeordnet, der das Metall-Sandwich-Paneel 1 komplettiert. Die Materialdicke der Stahlbleche 2, 2', insbesondere die des ersten Stahlblechs 2 beträgt beispielsweise 0,6 mm und kann aus Stabilitätsgründen und hohen auftretenden Belastungen während der Fahrt in der Materialdicke nicht weiter gesenkt werden.

Als erste Ausführungsform eines Halbzeugs ist in Figur 2a) ein Halbzeug 7 in Form eines Metall/Kunststoffverbundes dargestellt. Das Halbzeug 7 umfasst eine Metallschicht 8, vorzugsweise aus einem Stahlwerkstoff, welcher beidseitig metallisch beschichtet 9 ist, insbesondere verzinkt, vorzugsweise elektrolytisch verzinkt ist und eine Materialdicke von beispielsweise 0,3 mm aufweist. Der vorzugsweise beidseitig elektrolytisch beschichtete Stahlwerkstoff 8 ist einseitig vollflächig mit einer Kunststoffschicht 10 verbunden, welche bis mindestens 200°C, insbesondere bis mindestens 220°C temperaturbeständig ist und eine Materialdicke von beispielsweise 0,5 mm aufweist. Auf der der Kunststoffschicht gegenüberliegenden Seite ist die sichtbare Seite der Metallschicht 8 mit einer Coil-Coating-Beschichtung 11 versehen. Das Halbzeug 7 eignet sich hervorragend als Bauteil, insbesondere als Beplankungsteil für Nutzfahrzeuge oder Anhänger. Zwar fällt die Materialdicke des Halbzeugs 7 etwas größer als die Materialdicke des Stahlblechs 2 aus, jedoch kann durch Reduzierung des Metallanteils im Halbzeug 7 Masse eingespart werden, wenn sie beispielsweise als Beplankungsteil als Teil eines Kofferaufbaus für einen Tiefkühltransport verwendet wird, und die relativ dünne Metallschicht lässt sich kombiniert mit einer Kunststoffschicht als Metall/Kunststoffverbund problemlos durch Coil-Coating-Anlagen durchsetzen (hier nicht dargestellt). Hier ebenfalls nicht dargestellt, kann die Kunststoffschicht faserverstärkt sein, was wiederrum die Steifigkeit und/oder Festigkeit des Halbzeugs verbessern kann. Es kann durchaus sein, dass bei der Verwendung von faserverstärktem Kunststoff je nach Anwendung eine weitere Reduzierung der Materialdicke der Metallschicht möglich ist.

Als zweite Ausführungsform eines Halbzeugs ist in Figur 2b) ein Halbzeug 7' in Form eines Metall/Kunststoff/Metallverbundes dargestellt. Das Halbzeug 7' weist im Unterschied zu dem Halbzeug 7 eine zweite Metallschicht 8', vorzugsweise aus einem Stahlwerkstoff auf, welcher beidseitig metallisch beschichtet 9', insbesondere verzinkt, vorzugsweise elektrolytisch verzinkt ist und vollflächig mit der freien Oberfläche der Kunststoffschicht 10' verbunden ist. Die einzelnen Materialdicken des Halbzeugs 7' betragen bei der ersten und zweiten Metallschicht 8, 8' beispielsweise 0,2 mm und bei der Kunststoffschicht 10' beispielsweise 0,3 mm. Die zu dem Halbzeug 7 genannten Vorteile lassen sich auch auf das Halbzeug 7' übertragen.

Nicht dargestellt, kann beispielsweise die sichtbare Oberfläche zumindest der ersten Metallschicht 8 texturiert sein, um der späteren Verwendung des Halbzeugs 7, 7' ein verbessertes Erscheinungsbild zu verleihen.

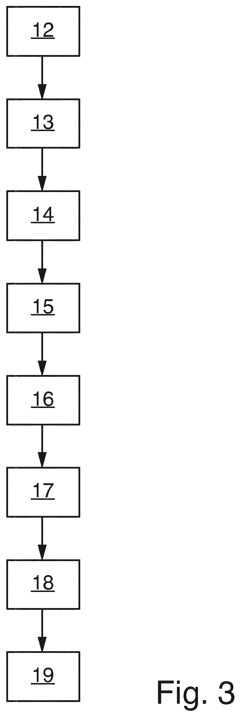

In Figur 3 ist eine schematische Abfolge von Schritten zur Herstellung von zumindest einseitig beschichteten platinen- oder bandförmigen Halbzeugen, insbesondere in einer Coil-Coating-Anlage. In Schritt 12 wird vorzugsweise ein bandförmiges Coil bereitgestellt, das entweder einen vorgenannten Metall/Kunststoffverbund, welcher auf der Kunststoffseite vorzugsweise mit einer Schutzfolie zum Schutz der Kunststoffoberfläche und zur Vermeidung der Anhaftung mit der Metallseite im aufgehaspelten Zustand versehen ist, die im weiteren Verlauf entfernt respektive abgezogen wird, oder einen Metall/Kunststoff/Metallverbund umfasst, wobei die Dicke der Metallschicht höchstens 0,5 mm, insbesondere höchstens 0,4 mm, vorzugsweise höchstens 0,35 mm und besonders bevorzugt höchstens 0,3 mm beträgt, wobei die Metallschicht vorzugsweise aus einem Stahlwerkstoff gebildet ist und beidseitig vorzugsweise elektrolytisch beschichtet ist, und die Dicke der Kunststoffschicht mindestens 0,2 mm, insbesondere mindestens 0,3 mm, vorzugsweise mindestens 0,4 mm beträgt, wobei der Kunststoff bis mindestens 200°C, insbesondere bis mindestens 220°C temperaturbeständig ist. Das bandförmige Coil wird abgehaspelt und Schritt 13 kontinuierlich zur Reinigung der zumindest ersten Metallschicht zugeführt. Eine Passivierung/ Aktivierung der zumindest ersten Metallschicht erfolgt in Schritt 14, so dass anschließend ein Haftvermittler (Primer) auf die zumindest ersten Metallschicht mittels Applizierwalze aufgetragen wird (Schritt 15), welcher bei einer Temperatur eingebrannt wird (Schritt 16), die derart auf den Kunststoff abgestimmt ist, sodass die Temperaturbeständigkeit des Kunststoffs im Verbund sichergestellt ist, wobei eine Temperatur von insbesondere maximal 220°, vorzugsweise maximal 200°C eingestellt wird. Im nächsten Schritt 17 wird eine Coil-Coating-Beschichtung auf die zumindest erste Metallschicht, die bereits den eingebrannten Haftvermittler aufweist, mittels Applizierwalze aufgetragen wird, welche wiederum bei einer Temperatur eingebrannt wird (Schritt 18), die im Wesentlichen der Temperatur in Schritt 16 entspricht. In Schritt 19 erfolgt entweder ein Aufhaspeln zu einem bandförmigen Halbzeug, wobei die Coil-Coating-Beschichtung mit einer Schutzfolie versehen wird, oder ein Ablängen zu platinenförmigen Halbzeugen.

Hier nicht dargestellt, kann die zumindest erste Metallschicht texturiert werden. Die Texturierung kann zum einen als Erhebung im Zuge des Coil-Coating-Verfahrens auf die zumindest erste Metallschicht aufgebracht respektive appliziert werden, beispielsweise in Schritt 18. Dies kann beispielsweise durch entsprechend bearbeitete Applizierwalzen umgesetzt werden. Alternativ oder kumulativ können Einprägungen nach dem Coil-Coating-Prozess respektive nach dem Einbrennprozess in die zumindest erste Metallschicht eingeformt werden, beispielsweise mittels einer Prägewalze nach Schritt 19, wobei insbesondere die Prägekraft derart angepasst ist, dass es nicht zu einem Fließen bzw. zu einer Dickenabnahme der Kunststoffschicht im Verbund kommt. Die Materialdicke der Metallschicht (8, 8') beträgt mindestens 0,05 mm, insbesondere mindestens 0,1 mm und vorzugsweise mindestens 0,15 mm. Die Materialdicke der Kunststoffschicht (10, 10') beträgt höchstens 3,0 mm, insbesondere höchstens 2,5 mm und vorzugsweise höchstens 2,0 mm.

Die Erfindung ist nicht auf die in der Zeichnung dargestellten Ausführungsbeispiele beschränkt, vielmehr können Halbzeuge in allen Bereichen verwendet werden und bestehende Lösungen (Coil-Coating-Bleche) ersetzen, in denen eine Gewichtsreduzierung eine wichtige Rolle spielen, z. B. im Bereich von Türen, Industrietore, Garagentore etc.. Die Verwendung ist nicht auf den Fahrzeugbau oder Weiße Ware beschränkt.

### Bezugszeichenliste

- 1: Metall-Sandwich-Paneel
- 2, 2': Stahlblech
- 3, 3': metallische Beschichtung
- 4: Coil-Coating-Beschichtung
- 5: lebensmittelbeständige organische Beschichtung
- 6: Kunststoffkern
- 7: Metall/Kunststoffverbund, Halbzeug
- 7': Metall/Kunststoff/Metallverbund, Halbzeug
- 8, 8': Metallschicht
- 9,9': metallische Beschichtung
- 10, 10': Kunststoffschicht
- 11: Coil-Coating-Beschichtung
- 12: Bereitstellung eines bandförmigen Coils
- 13: Reinigung
- 14: Aktivierung/Passivierung
- 15: Haftvermittlerauftrag
- 16: Einbrennen des Haftvermittlers
- 17: Coil-Coating-Beschichtungsauftrag
- 18: Einbrennen der Coil-Coating-Beschichtung
- 19: Aufhaspeln/Ablängen

## Patentansprüche

1. Verfahren zum Herstellen eines einseitig beschichteten platinen- oder bandförmigen Halbzeugs, **gekennzeichnet durch**
Bereitstellen eines bandförmigen Coils umfassend eine erste Metallschicht und eine Kunststoffschicht, die vollflächig zu einem Metall/Kunststoffverbund miteinander verbunden sind, wobei die Materialdicke der Metallschicht höchstens 1,5 mm beträgt und die Materialdicke der Kunststoffschicht mindestens 0,2 mm beträgt,
Beschichten der sichtbaren Oberfläche der Metallschicht des Metall/Kunststoffverbunds im Coil-Coating-Verfahren und Einbrennen der Coil-Coating-Beschichtung,
Aufhaspeln zu einem bandförmigen Halbzeug oder Ablängen zu platinenförmigen Halbzeugen.

2. Verfahren nach Anspruch 2,
**dadurch gekennzeichnet, dass**
eine zweite Metallschicht angeordnet wird, die vollflächig mit der freien Oberfläche der Kunststoffschicht zu einem Metall/Kunststoff/Metallverbund verbunden wird, wobei die sichtbare Oberfläche der zweiten Metallschicht des Metall/Kunststoff/Metallverbunds im Coil-Coating-Verfahren beschichtet wird.

3. Verfahren nach einem der vorgenannten Ansprüche,
**dadurch gekennzeichnet, dass**
die Einbrenntemperatur derart auf den Kunststoff abgestimmt ist, dass die Temperaturbeständigkeit des Kunststoffs sichergestellt ist, wobei eine Temperatur von insbesondere maximal 220°, vorzugsweise maximal 200°C eingestellt wird.

4. Verfahren nach einem der vorgenannten Ansprüche,
**dadurch gekennzeichnet, dass**
die sichtbare Oberfläche der ersten und/oder zweiten Metallschicht texturiert wird.

5. Verfahren nach einem der vorgenannten Ansprüche,
**dadurch gekennzeichnet, dass**
die Metallschicht aus einem Stahlwerkstoff, insbesondere aus einem beidseitig metallisch beschichteten Stahlwerkstoff gebildet ist.

6. Verwendung des Halbzeugs erhalten mit dem Verfahren nach einem der Ansprüche 1 bis 5 als Bauteil für Nutzfahrzeuge, Anhänger oder Weiße Ware.

## Claims

1. Method for producing a single-sided coated plate or strip-shaped semi-finished product, **characterized by**
providing a strip-shaped coil comprising a first metal layer and a plastic layer, which are bonded together over the entire surface to form a metal/plastic composite, wherein the material thickness of the metal layer is at most 1.5 mm and the material thickness of the plastic layer is at least 0.2 mm,
coating the visible surface of the metal layer of the metal/plastic composite using the coil coating process and baking the coil coating,
winding into a strip-shaped semi-finished product or cutting to length into plate-shaped semi-finished products.

2. Method according to claim 2,
**characterized in that**
a second metal layer is arranged, which is bonded over its entire surface to the free surface of the plastic layer to form a metal/plastic/metal composite, wherein the visible surface of the second metal layer of the metal/plastic/metal composite is coated using the coil coating process.

3. Method according to one of the preceding claims,
**characterized in that**
the baking temperature is adjusted to the plastic in such a way that the temperature resistance of the plastic is ensured, whereby a temperature of, in particular, a maximum of 220°C, preferably a maximum of 200°C, is set.

4. Method according to one of the preceding claims,
**characterized in that**
the visible surface of the first and/or second metal layer is textured.

5. Method according to one of the preceding claims,
**characterized in that**
the metal layer is formed from a steel material, in particular from a steel material coated with metal on both sides.

6. Use of the semi-finished product according to one of claims 1 to 5 as a component for commercial vehicles, trailers, or white goods.

## Revendications

1. Procédé de fabrication d'un produit semi-fini en forme de plaque ou de bande revêtu sur une face, **caractérisé par**
la mise à disposition d'une bobine en forme de bande comprenant une première couche métallique et une couche plastique, qui sont reliées entre elles sur toute leur surface pour former un composite métal/plastique, l'épaisseur de la couche métallique étant au maximum de 1,5 mm et l'épaisseur de la couche plastique étant d'au moins 0,2 mm, le revêtement de la surface visible de la couche métallique du composite métal/plastique selon le procédé de revêtement de bobines et la cuisson du revêtement de bobines,
enroulement en un produit semi-fini en forme de bande ou découpe en produits semi-finis en forme de plaques.

2. Procédé selon la revendication 2,
**caractérisé en ce qu'**
une deuxième couche métallique est disposée, qui est reliée sur toute sa surface à la surface libre de la couche plastique pour former un composite métal/plastique/métal, la surface visible de la deuxième couche métallique du composite métal/plastique/métal étant revêtue selon le procédé de revêtement en continu.

3. Procédé selon l'une des revendications précédentes,
**caractérisé en ce que**
la température de cuisson est adaptée au plastique de manière à garantir la résistance thermique du plastique, une température maximale de 220 °C, de préférence de 200 °C, étant réglée.

4. Procédé selon l'une des revendications précédentes,
**caractérisé en ce que**
la surface visible de la première et/ou de la deuxième couche métallique est texturée.

5. Procédé selon l'une des revendications précédentes,
**caractérisé en ce que**
la couche métallique est formée à partir d'un matériau en acier, en particulier à partir d'un matériau en acier revêtu métalliquement des deux côtés.

6. Utilisation du produit semi-fini selon l'une des revendications 1 à 5 comme composant pour véhicules utilitaires, remorques ou produits blancs.
